(19) Europäisches Patentamt
European Patent Office
Office européen des brevets

(11) **EP 1 018 656 B1**

(12) **FASCICULE DE BREVET EUROPEEN**

(45) Date de publication et mention
de la délivrance du brevet:
**23.01.2008 Bulletin 2008/04**

(51) Int Cl.:
**G02B 6/02** *(2006.01)*      **H04B 10/18** *(2006.01)*

(21) Numéro de dépôt: **99403160.7**

(22) Date de dépôt: **16.12.1999**

(54) **Fibre optique à faible pente de dispersion chromatique**

Optische Faser mit geringem Gradienten der chromatischen Dispersion

Optical fibre with low slope of chromatic dispersion

(84) Etats contractants désignés:
**AT BE CH CY DE DK ES FI FR GB GR IE IT LI LU MC NL PT SE**

(30) Priorité: **04.01.1999 FR 9900007**

(43) Date de publication de la demande:
**12.07.2000 Bulletin 2000/28**

(73) Titulaire: **Draka Comteq B.V.**
**1083 HJ Amsterdam (NL)**

(72) Inventeurs:
 • **Rosseau, Jean-Claude**
  **78400 Chatou (FR)**
 • **Paillot, Marianne**
  **92600 Asnieres (FR)**

(74) Mandataire: **Blokland, Arie**
**Algemeen Octrooi- en Merkenbureau,**
**P.O. Box 645**
**5600 AP Eindhoven (NL)**

(56) Documents cités:
 **EP-A- 0 883 002**       **US-A- 4 372 647**
 **US-A- 4 435 040**      **US-A- 5 568 583**
 **US-A- 5 673 354**      **US-A- 5 684 909**
 **US-A- 5 838 867**

 • **YOUWEI LI ET AL: "TRIPLE-CLAD SINGLE-MODE FIBERS FOR DISPERSION FLATTENING" OPTICAL ENGINEERING, vol. 33, no. 12, 1 décembre 1994 (1994-12-01), pages 3999-4005, XP000484832 ISSN: 0091-3286**
 • **TAYA-CHO ET.AL.: "Dispersion flattened single-mode fiber for 10.000 km transmission system" 16TH EUROPEAN CONFERENCE ON OPTICAL COMMUNICATION, vol. 1, 16 - 20 septembre 1990, pages 505-507, XP002116517 Amsterdam, The Netherlands**
 • **L.G.COHEN ET AL.: ELECTRONICS LETTERS, vol. 18, no. 24, 25 novembre 1982 (1982-11-25), pages 1023-1024, Stevenage, Herts, GB**

**Description**

La présente invention concerne le domaine des transmissions par fibre optique, et plus particulièrement le domaine des transmissions à multiplexage en longueur d'onde.

Pour des fibres optiques, on qualifie généralement le profil d'indice de réfraction en fonction de l'allure du graphe de la fonction qui au rayon associe l'indice de réfraction. On représente de façon classique sur les abscisses la distance r au centre de la fibre, et sur les ordonnées l'indice, défini par sa différence absolue ou en pour cent par rapport à l'indice de la gaine de la fibre. On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une dispersion chromatique cumulée sensiblement nulle sur la liaison, de sorte à limiter l'élargissement des impulsions. Une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. On utilise donc de préférence des fibres appelées NZ-DSF (acronyme de l'anglais "non zéro DSF") présentant une longueur d'onde $\lambda_0$ de dispersion chromatique nulle en dehors de la plage des canaux du multiplex pour éviter les problèmes apportés par le mélange à quatre ondes. En outre, l'utilisation de ces fibres pour des systèmes à multiplexage en longueur d'onde conduit à rechercher une pente de dispersion chromatique faible, de sorte à conserver des caractéristiques de propagation similaires pour les différents canaux. De ce point de vue, la valeur de référence pour la pente de dispersion chromatique est de 0,075 ps/nm$^2$.km.

Richard Lundin, Dispersion Flattening in a W fiber, Applied Optics vol. 33 no 6, pp. 1011-1014(1994) décrit un procédé permettant d'obtenir une dispersion plate dans des fibres monomodes à double gaine. Le procédé est appliqué aux fibres présentant un profil d'indice avec un coeur en rectangle et anneau d'indice inférieur à celui de la gaine et permet d'obtenir une valeur moyenne de la dispersion de 0,9 ps/km.nm dans la plage de longueurs d'onde de 1250 nm à 1600 nm, avec une longueur d'onde de coupure de 1250 nm. Ce document indique simplement que le fait de maintenir à un niveau faible la dispersion chromatique permet de limiter l'élargissement des impulsions.

Y. Li et C.D. Hussey, Triple-clad single mode fibers for dispersion flattening, Optical Engineering, vol. 33 no 12, pp. 3999-4005 (1994) décrit l'intérêt des fibres à dispersion plate pour les systèmes de transmission à multiplexage en longueur d'onde, avec une annulation de la dispersion chromatique à 1300 et 1550 nm. Ce document propose une optimisation des fibres à triple gaine pour obtenir une dispersion plate, avec des zéros de dispersion chromatique à 1300 et 1550 nm, des pertes intrinsèques faibles, et une bonne sensibilité à la courbure. La longueur d'onde de coupure pour le second mode est à 1250 nm. Les fibres obtenues présentent un coeur d'indice supérieur à celui de la gaine externe, une première gaine d'indice inférieur à celui de la gaine externe, et une deuxième gaine d'indice supérieur à celui de la gaine externe. Les pertes induites par un enroulement de la fibre sur un rayon de 5 cm sont inférieures à 2,4 dB/km, et la dispersion est inférieure à 3 ps/nm.km dans la plage de longueur d'onde entre 1300 et 1550 nm.

EP-A-0 368 014 décrit une autre fibre présentant le même type de profil. Elle présente entre 1280 et 1560 nm une dispersion chromatique inférieure ou égale à 3,5 ps/nm.km, et une sensibilité à la courbure inférieure à 10$^{-6}$ dB/m pour un rayon de 5 cm.

EP-A-0 131 634 décrit encore une fibre présentant le même type de profil. Cette fibre présente une dispersion chromatique avec trois zéros de dispersion, et des valeurs opposées des maxima et minima relatifs de la dispersion entre les zéros.

P.K. Bachmann, Worldwide status of dispersion-modified single mode fibres, Philips J. Res.42, 435-450, (1987) propose une revue des fibres à dispersion plate et à dispersion décalée (DSF). L'auteur conclut sur la nécessité de diminuer les pertes induites par courbure des fibres.

L.G. Cohen et al. Electronic Letters, vol.18, 1982, p.1023-1024 décrit une fibre monomode à dispersion décalée ayant un profil d'indice avec un coeur d'indice supérieur à l'indice de la gaine extérieure, suivi d'une partie annulaire enterrée d'indice inférieur à celui de la gaine extérieure, suivie d'un anneau d'indice supérieur à celui de la gaine extérieure, suivi encore d'une partie annulaire enterrée d'indice inférieur à celui de la gaine extérieure.

L'invention propose une fibre qui présente des caractéristiques appropriées pour une utilisation dans des systèmes de transmission à multiplexage en longueur d'ondes, sans induire d'atténuation importante, et en limitant les effets non-linéaires. L'invention s'applique à des systèmes de transmissions en multiplex de longueur d'onde à impulsions de toute nature, et notamment à impulsions RZ ou NRZ.

Plus précisément, l'invention propose une fibre optique monomode à dispersion décalée comme définie dans la revendication 1.

Dans un mode de réalisation, le maximum est unique dans la plage de longueurs d'onde de 1400 à 1650 nm.

De préférence, la fibre présente une valeur de dispersion chromatique positive au dit maximum.

Dans ce cas, le maximum est avantageusement atteint pour une longueur d'onde entre 1530 et 1580 nm.

La fibre peut présenter un zéro de dispersion chromatique pour une longueur d'onde inférieure à 1450 nm.

Elle présente aussi avantageusement un zéro de dispersion chromatique pour une longueur d'onde supérieure à 1600 nm.

Dans un autre mode de réalisation, la fibre présente une valeur de dispersion chromatique négative au dit maximum.

Dans ce cas, le maximum est de préférence atteint pour une longueur d'onde entre 1480 et 1520 nm.

La fibre peut en outre présenter dans la plage de longueurs d'onde de 1530 à 1580 une pente de dispersion chromatique positive.

Dans un mode de réalisation, la fibre présente dans la plage de longueurs d'onde de 1530 à 1580 une pente de dispersion chromatique négative.

Dans un autre mode de réalisation, la fibre présente dans la plage de longueurs d'onde de 1530 à 1580 une pente de dispersion chromatique inférieure en valeur absolue à 0.03 $ps/nm^2.km$.

Avantageusement, la fibre présente pour une longueur d'onde de 1300 nm une dispersion chromatique inférieure en valeur absolue à 7 ps/nm.km.

La fibre présente un profil d'indice avec un coeur de fibre et une gaine, le coeur comprenant une partie centrale d'indice ($n_1$) supérieur à celui ($n_s$) de la gaine de la fibre, une partie annulaire d'indice ($n_2$) inférieur à celui de la gaine autour de ladite partie centrale, et un anneau d'indice ($n_3$) supérieur à celui de la gaine autour de la dite partie annulaire.

Avantageusement, la différence des indices de la partie centrale et de la partie annulaire est comprise entre $13.10^{-3}$ et $17.10^{-3}$.

De préférence, la différence ($\Delta n_2$) entre l'indice ($n_2$) de la partie annulaire et l'indice ($n_s$) de la gaine est comprise entre $-8.10^{-3}$ et $-6.10^{-3}$.

Dans un mode de réalisation, la différence ($\Delta n_3$) entre l'indice ($n_3$) de l'anneau et l'indice ($n_s$) de la gaine est comprise entre $3.10^{-3}$ et $6.10^{-3}$.

Avantageusement, le rayon ($a_1$) de la partie centrale est inférieur ou égal à 3 $\mu$m.

De préférence, le rapport ($a_2 - a_1$)/$a_1$ entre l'épaisseur de la partie annulaire et le rayon de la partie centrale est compris entre 0,8 et 1,2.

Dans un mode de réalisation, le rapport ($a_3 - a_2$)/$a_1$ entre l'épaisseur de l'anneau et le rayon de la partie centrale est compris entre 0,3 et 0,7.

L'invention propose en outre l'utilisation d'une telle fibre pour des systèmes de transmission à multiplexage en longueur d'ondes.

D'autres caractéristiques et avantages de l'invention apparaîtront à la lecture de la description qui suit de modes de réalisation de l'invention, donnée à titre d'exemple uniquement, et en référence aux dessins, qui montrent

- figure 1, un exemple de profil d'indice d'une fibre selon l'invention ;
- figure 2, un autre exemple de profil d'indice d'une fibre selon art antérieur.

L'invention propose une fibre optique monomode à dispersion décalée, qui présente, dans une plage de longueur d'ondes de 1400 à 1650 nm, un maximum de la dispersion chromatique, et une pente de dispersion chromatique en valeur absolue inférieure à 0,05 $ps/nm^2.km$.

Avantageusement, le maximum de la dispersion chromatique est unique dans cette plage de longueurs d'onde.

La dispersion chromatique peut présenter une valeur positive ou négative pour ce maximum. Si la dispersion chromatique présente en son maximum une valeur positive, la fibre peut présenter un zéro de dispersion chromatique de part et d'autre du maximum. La position du maximum de la dispersion est alors de préférence choisie dans la plage de longueurs d'onde du multiplex, ou entre 1530 et 1580 nm. Avantageusement, la dispersion chromatique s'annule une première fois pour une valeur de longueur d'onde inférieure à 1450 nm. Elle peut s'annuler une seconde fois pour une valeur de longueur d'onde supérieure à 1600 nm. Dans ce cas, la fibre est NZ-DSF, i.e. ne présente pas de zéros de dispersion dans la plage de longueurs d'onde du peigne, entre 1530 et 1580 nm, et est particulièrement adaptée à être utilisée pour des systèmes de transmission à multiplexage en longueur d'onde. Les valeurs non nulles de la dispersion permettent de limiter les effets non linéaires, comme par exemple le mélange à quatre ondes.

Si la dispersion chromatique présente une valeur négative en son maximum, la position de ce maximum est avantageusement choisie de sorte que dans la plage de longueur d'onde du multiplex, la dispersion chromatique et la pente de dispersion chromatique soient négatives. Ainsi, si l'on choisit un maximum de la dispersion chromatique entre 1480 et 1520 nm, de préférence voisin de 1500 nm, on peut obtenir une dispersion chromatique négative et une pente de dispersion négative dans la plage du multiplex.

L'avantage dans ce cas est qu'il est possible dans le système de transmission d'utiliser pour la compensation de la dispersion une fibre à saut d'indice avec une pente de dispersion positive, et une dispersion positive. Il n'est alors pas nécessaire d'utiliser une fibre de compensation de dispersion fortement atténuante et présentant un faible diamètre de mode; une telle gestion de la dispersion chromatique est décrite dans la demande de brevet déposée par la demanderesse le même jour que la présente demande, sous le titre "Système de transmission à fibre optique à multiplexage en longueur d'onde ". Il y est proposé d'utiliser comme fibre de ligne de la fibre à faible pente, avec une dispersion chromatique comprise en valeur absolue entre 3 et 5,5 ps/nm.km dans une plage de longueur d'onde de 1530 à 1600 nm, et une pente de dispersion chromatique inférieure en valeur absolue à 0,04 ps/nm$^2$.km dans une plage de longueur d'onde de 1530 à 1600 nm.

On pourrait aussi choisir une dispersion chromatique négative et une pente de dispersion chromatique positive dans la plage de longueurs d'onde du multiplex, ou encore une dispersion chromatique positive et une pente de dispersion chromatique négative dans la plage de longueurs d'onde du multiplex.

En tout état de cause, les faibles valeurs de la pente de dispersion assurent que les canaux du multiplex sont transmis sans différences sensibles des caractéristiques de transmission. En outre, ces valeurs de la pente de dispersion assurent que la fibre de l'invention présente aussi autour de 1300 nm des valeurs de dispersion faibles, et peut ainsi être utilisée aussi autour de cette valeur de longueur d'onde.

De préférence, la fibre de l'invention présente aussi dans la plage du multiplex une pente de dispersion chromatique inférieure en valeur absolue à 0,03 ps/nm$^2$.km. Une telle valeur présente l'avantage de limiter les distorsions entre les différents canaux du peigne.

La fibre présente de préférence une dispersion chromatique faible à 1300 nm, et typiquement une dispersion chromatique inférieure en valeur absolue à 7 ps/nm.km.

Les autres caractéristiques de propagation de la fibre de l'invention peuvent être choisies dans les plages de valeurs classiques pour des fibres NZ-DSF, par exemple:

- atténuation inférieure à 0,25 dB/km;
- pertes par courbure inférieures à 0,5 dB/km pour un enroulement autour d'un rayon de 30 mm;

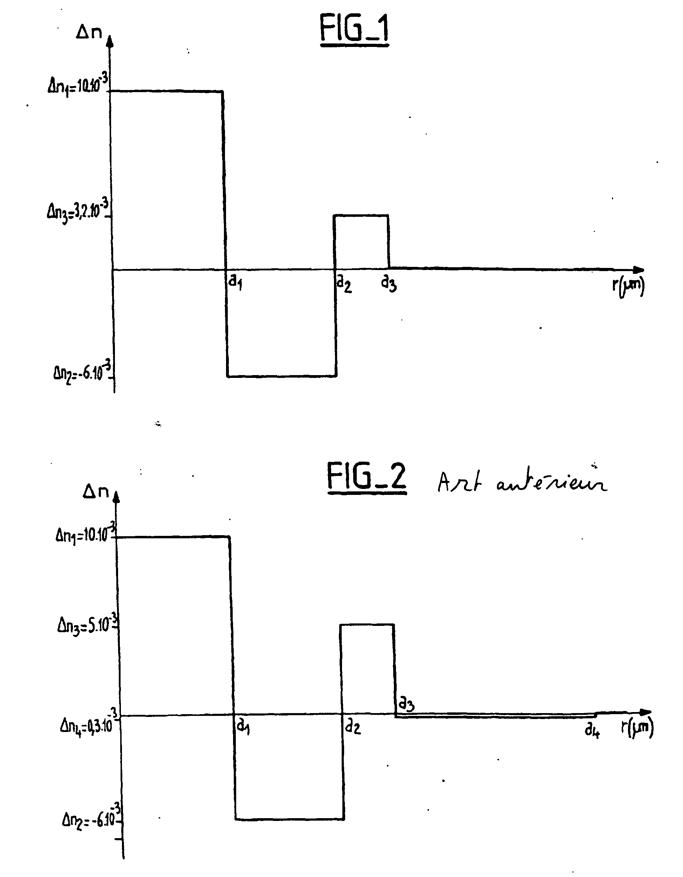

On donne maintenant un exemple de réalisation de l'invention, en référence à la figure 1, qui montre un exemple de profil d'indice d'une fibre selon l'invention. Le profil d'indice de la figure 1 est un profil d'indice en rectangle avec anneau. Ce profil présente, en partant du centre de la fibre vers la gaine, une partie centrale d'indice $n_1$ sensiblement constant, jusqu'à un rayon $a_1$. L'indice $n_1$ est supérieur à l'indice $n_s$ de la silice de la gaine. Dans le mode de réalisation de la figure 1, la différence $\Delta n_1$ entre l'indice $n_1$ et l'indice de la gaine vaut 10.10$^{-3}$, et le rayon $a_1$ vaut 2,7 μm.

Autour de cette partie centrale en rectangle d'indice supérieur à celui de la gaine, la fibre de invention présente une partie annulaire enterrée, d'indice $n_2$ inférieur à celui de la gaine, entre les rayons $\alpha_1$ et $\alpha_2$. Dans le mode de réalisation de la figure 1, la différence $\Delta n_2$ entre l'indice $n_2$ et indice de la gaine vaut -6.10$^{-3}$, et la partie enterrée s'étend sur une épaisseur de 2,7 μm.

La fibre présente autour de la partie enterrée un anneau d'indice $n_3$, supérieur à celui de la gaine, entre des rayons $a_2$ et $a_3$. Dans le mode de réalisation de la figure 1, la différence $\Delta n_3$ entre l'indice $n_3$ de l'anneau et l'indice de la gaine vaut 3,2.10$^{-3}$, et l'anneau présente une épaisseur de 1,35 μm de sorte que le rayon $a_3$ vaut 6,75 μm.

Ce choix de profil d'indice assure que la pente de la dispersion chromatique reste inférieure à 0,05 ps/nm$^2$.km entre 1300 et 1600 nm. Plus précisément, la dispersion chromatique dans cet exemple présente une valeur maximale de - 0,6 ps/nm.km pour une valeur de longueur d'onde de 1500 nm.

La fibre de la figure 1 présente les valeurs suivantes de dispersion chromatique, en ps/nm.km:

| 1450 nm | 1500 nm | 1550 nm | 1600 nm |
|---------|---------|---------|---------|
| -0,7 | -0,6 | -0,95 | -1,8 |

Dans l'exemple de la figure, le maximum de la dispersion chromatique est atteint pour une valeur négative de la dispersion, et la dispersion chromatique est négative dans la plage de longueurs d'onde du multiplex.

La figure 2 montre un exemple de profil d'indice selon art antérieur. Dans le mode de réalisation de la figure 2, le profil d'indice est un profil en rectangle avec anneau, comme à la figure 1, mais avec en outre une partie enterrée autour de l'anneau. Ce profil présente, en partant du centre de la fibre vers la gaine, une partie centrale d'indice $n_1$ sensiblement constant, jusqu'à un rayon $a_1$. L'indice $n_1$ est supérieur à l'indice $n_s$ de la silice de la gaine. Dans le mode de réalisation de la figure 2, la différence $\Delta n_1$ entre l'indice $n_1$ et l'indice de la gaine vaut 10.10$^{-3}$.

Autour de cette partie centrale en rectangle d'indice supérieur à celui de la gaine, la fibre de la figure 2 présente une partie annulaire enterrée, d'indice $n_2$ inférieur à celui de la gaine, entre les rayons $a_1$ et $a_2$. Dans le mode de réalisation de la figure, la différence $\Delta n_2$ entre l'indice $n_2$ et l'indice de la gaine vaut -6.10$^{-3}$.

La fibre présente autour de la partie enterrée un anneau d'indice $n_3$, supérieur à celui de la gaine, entre des

rayons $a_2$ et $a_3$. Dans le mode de réalisation de la figure 2, la différence $\Delta n_3$ entre l'indice $n_3$ de l'anneau et l'indice de la gaine vaut $5.10^{-3}$.

Autour de l'anneau, la fibre présente encore une partie enterrée entre des rayons $a_3$ et $a_4$, d'indice $n_4$ inférieur à l'indice de la gaine, et supérieur à l'indice de la partie enterrée s'étendant entre le rectangle et l'anneau. Dans l'exemple de la figure 2, la différence $\Delta n_4$ entre l'indice $n_3$ de l'anneau et l'indice de la gaine vaut $-0,3.10^{-3}$.

Les rayons possibles pour ces valeurs d'indice vérifient avantageusement les relations suivantes :

$$a_2 = 2.a_1$$

$$a_3 = 5.a_1/2$$

$$a_4 = 9.a_1/2$$

Pour ces relations entre les rayons, et pour différentes valeurs du rayon a1 de la partie en rectangle, on trouve les valeurs de dispersion chromatique données dans le tableau suivant, en ps/nm.km :

|  | 1450 nm | 1500 nm | 1550nm | 1600 nm | 1650 nm |
|---|---|---|---|---|---|
| $a_1 = 2,8\mu m$ | 0,6 | 1,2 | 1,3 | 1,1 | 0,7 |
| $a_1 = 2,9\ \mu m$ | 3,9 | 4,9 | 5,5 | 5,8 | 5,7 |

Dans un cas comme dans l'autre, on trouve des valeurs de dispersion positives dans la plage de 1450 à 1650 nm, et un maximum de la dispersion dans cette plage.

On peut aussi choisir d'autres valeurs d'indice que celles données en exemple à la figure 2. Pour des valeurs d'indice suivantes :

$$\Delta n_1 = 10.10^{-3}$$

$$\Delta n_2 = -7.10^{-3}$$

$$\Delta n_3 = 5.10^{-3}$$

$$\Delta n_4 = -0,3.10^{-3}$$

on trouve les valeurs de dispersion données dans le tableau suivant, en ps/nm.km, pour différentes valeurs du rayon $a_1$:

|  | 1450 nm | 1500 nm | 1550n m | 1600nm | 1650 nm |
|---|---|---|---|---|---|
| $a_1 = 2,8\ \mu m$ | 0,8 | 1 | 0,7 | -0,1 | -1,3 |
| $a_1 = 2,9\ \mu m$ | 4,2 | 5,1 | 5,5 | 5,3 | 4,7 |

Dans le premier cas, le maximum est atteint autour de 1500 nm, et les valeurs de dispersion sont positives, puis négatives. Dans le deuxième cas, le maximum est atteint autour de 1550 nm, et les valeurs de dispersion sont positives dans la plage du peigne.

Pour des valeurs d'indice de

$$\Delta n_1 = 10.10^{-3}$$

$$\Delta n_2 = -7.10^{-3}$$

$$\Delta n_3 = 3.10^{-3}$$

$$\Delta n_4 = -0,3.10^{-3}$$

on trouve les valeurs de dispersion données dans le tableau suivant, en ps/nm.km, pour différentes valeurs du rayon $a_1$ :

|  | 1450 nm | 1500 nm | 1550 nm | 1600 nm | 1650 nm |
|---|---|---|---|---|---|
| $a_1 = 2,8\ \mu m$ | 3,8 |  | 5 |  | 4 |
| $a_1 = 2,9\ \mu m$ |  | 7,3 | 8,5 | 9,4 | 9,3 |

Le maximum est atteint autour de 1550 nm dans le premier cas et autour de 1600 nm dans le second cas.

De façon générale, l'invention peut être obtenue grâce à une combinaison des caractéristiques suivantes:

$$13.10^{-3} \le \Delta n_1 - \Delta n_2 \le 17.10^{-3}$$

$$-8.10^{-3} \le \Delta n_2 \le -6.10^{-3}$$

$$3.10^{-3} \le \Delta n_3 \le 6.10^{-3}$$

$$a_1 \le 3\ \mu m$$

$$0,8 \le (a_2 - a_1)/a_1 \le 1,2$$

$$0,3 \le (a_3 - a_2)/a_1 \le 0,7$$

Pour le mode de réalisation de la figure 2, on a en outre de préférence

$$1,5 \le (a_4 - a_3)/a_1 \le 2,5$$

et

$$-0,5.10^{-3} \le \Delta n_4 \le -0,1.10^{-3}$$

Dans les exemple des figures 1 et 2, $(a_2 - a_1)/a_1$ vaut 1 et $(a_3 - a_2)/a_1$ vaut 0,5. Dans l'exemple de la figure 2, $(a_4 - a_3)/a_1$ vaut 2. Dans les deux derniers exemples, $(a_2 - a_1)/a_1$ vaut 1 et $(a_3 - a_2)/a_1$ vaut 0,5.

L'invention peut être fabriquée par l'homme du métier à l'aide de techniques connues, comme le MCVD ou les autres techniques couramment utilisées pour la fabrication des fibres optiques.

Dans la description qui précède, on a considéré les valeurs de la dispersion chromatique dans la plage de longueurs d'onde de 1400 à 1650 nm. La présence d'un maximum de dispersion dans cette plage ne préjuge pas des variations de la dispersion en dehors de la plage.

**Revendications**

1. Une fibre optique monomode à dispersion décalée **caractérisée en ce qu'**elle présente un profil d'indice avec un coeur de fibre et une gaine d'indice constant, le coeur étant constitué d' une partie centrale d'indice ($n_1$) supérieur à celui ($n_s$) de la gaine de la fibre, une partie annulaire d'indice ($n_2$) inférieur à celui de la gaine autour de ladite partie centrale, et un anneau d'indice ($n_3$) supérieur à celui de la gaine autour de la dite partie annulaire les paramètres du profil étant ajustés de manière à ce que la fibre présente, dans la plage de longueur d'ondes de 1400 à 1650 nm, un maximum de la dispersion chromatique et une pente de dispersion chromatique en valeur absolue inférieure à 0,05 $ps/nm^2.km$ , et où la dispersion chromatique aux longueurs d'onde de 1400 nm et 1650 nm est inférieure au maximum de la dispersion chromatique dans la plage de longueurs d'onde allant de 1400 à 1650 nm.

2. La fibre selon la revendication 1, **caractérisée en ce que** le maximum est unique dans la plage de longueurs d'onde de 1400 à 1650 nm.

3. La fibre selon la revendication 1 ou 2, **caractérisée en ce qu'**elle présente une valeur de dispersion chromatique positive au dit maximum.

4. La fibre selon la revendication 3, **caractérisée en ce que** le dit maximum est atteint pour une longueur d'onde entre 1530 et 1580 nm.

5. La fibre selon la revendication 3 ou 4, **caractérisée en ce qu'**elle présente un zéro de dispersion chromatique pour une longueur d'onde inférieure à 1450 nm.

6. La fibre selon la revendication 3, 4 ou 5, **caractérisée en ce qu'**elle présente un zéro de dispersion chromatique pour une longueur d'onde supérieure à 1600 nm.

7. La fibre selon la revendication 1 ou 2, **caractérisée en ce qu'**elle présente une valeur de dispersion chromatique négative au dit maximum.

8. La fibre selon la revendication 7, **caractérisée en ce que** le dit maximum est atteint pour une longueur d'onde entre 1480 et 1520 nm.

9. La fibre selon l'une des revendications 1 à 8, **caractérisée en ce qu'**elle présente dans la plage de longueurs d'onde de 1530 à 1580 nm une pente de dispersion chromatique positive.

10. La fibre selon l'une des revendications 1 à 7, **caractérisée en ce qu'**elle présente dans la plage de longueurs d'onde de 1530 à 1580 nm une pente de dispersion chromatique négative.

11. La fibre selon l'une des revendications 1 à 10, **caractérisée en ce qu'**elle présente dans la plage de longueurs d'onde de 1530 à 1580 nm une pente de dispersion chromatique inférieure en valeur absolue à 0.03 $ps/nm^2.km$.

12. La fibre selon l'une des revendications 1 à 11, **caractérisée en ce qu'**elle présente pour une longueur d'onde de 1300 nm une dispersion chromatique inférieure en valeur absolue à 7 ps/nm.km.

13. La fibre selon l'une des revendications 1 à 12, **caractérisée en ce que** la différence des indices de la partie centrale et de la partie annulaire est comprise entre $13.10^{-3}$ et $17.10^{-3}$.

14. La fibre selon l'une des revendications 1 à 13, **caractérisée en ce que** la différence ($\Delta n_2$) entre l'indice ($n_2$) de la partie annulaire et l'indice ($n_s$) de la gaine est comprise entre $-8.10^{-3}$ et $-6.10^{-3}$.

**15.** La fibre selon l'une des revendications 1 à 14, **caractérisée en ce que** la différence ($\Delta n_3$) entre l'indice ($n_3$) de l'anneau et l'indice ($n_s$) de la gaine est comprise entre $3.10^{-3}$ et $6.10^{-3}$.

**16.** La fibre selon l'une des revendications 1 à 15, **caractérisée en ce que** le rayon ($a_1$) de la partie centrale est inférieur ou égal à 3 $\mu$m.

**17.** La fibre selon l'une des revendications 1 à 16, **caractérisée en ce que** le rapport ($a_2 - a_1$)/$a_1$ entre l'épaisseur de la partie annulaire et le rayon de la partie centrale est compris entre 0,8 et 1,2.

**18.** La fibre selon l'une des revendications 1 à 17, **caractérisée en ce que** le rapport ($a_3 - a_2$)/$a_1$ entre l'épaisseur de l'anneau et le rayon de la partie centrale est compris entre 0,3 et 0,7.

**19.** Utilisation de la fibre selon l'une des revendications précédentes pour des systèmes de transmission à multiplexage en longueur d'ondes.

**Claims**

**1.** A dispersion-shifted, single-mode optical fibre, **characterised in that** it has an index profile comprising a fibre core and a cladding of constant index, the core being composed of a central portion having an index ($n_1$) greater than that ($n_s$) of the cladding of the fibre, and around said central portion an annular portion having an index ($n_2$) less than that of the cladding, and around said annular portion a ring having an index ($n_3$) greater than that of the cladding, the parameters of the profile being adjusted so that the fibre has, in the wavelength range from 1400 to 1650 nm, a chromatic dispersion maximum and a chromatic dispersion slope which in terms of absolute value is less than 0.05 ps/nm$^2$.km, and wherein the chromatic dispersion at the wavelengths of 1400 nm and 1650 nm is less than the chromatic dispersion maximum in the wavelength range extending from 1400 to 1650 nm.

**2.** The fibre according to claim 1, **characterised in that** the maximum is the sole maximum in the wavelength range from 1400 to 1650 nm.

**3.** The fibre according to claim 1 or 2, **characterised in that** it has a chromatic dispersion value which is positive at said maximum.

**4.** The fibre according to claim 3, **characterised in that** said maximum is attained for a wavelength between 1530 and 1580 nm.

**5.** The fibre according to claim 3 or 4, **characterised in that** it has zero chromatic dispersion for a wavelength less than 1450 nm.

**6.** The fibre according to claim 3, 4 or 5, **characterised in that** it has zero chromatic dispersion for a wavelength greater than 1600 nm.

**7.** The fibre according to claim 1 or 2, **characterised in that** it has a chromatic dispersion value which is negative at said maximum.

**8.** The fibre according to claim 7, **characterised in that** said maximum is attained for a wavelength between 1480 and 1520 nm.

**9.** The fibre according to one of claims 1 to 8, **characterised in that** in the wavelength range from 1530 to 1580 nm it has a positive chromatic dispersion slope.

**10.** The fibre according to one of claims 1 to 7, **characterised in that** in the wavelength range from 1530 to 1580 nm it has a negative chromatic dispersion slope.

**11.** The fibre according to one of claims 1 to 10, **characterised in that** in the wavelength range from 1530 to 1580 nm it has a chromatic dispersion slope which in terms of absolute value is less than 0.03 ps/nm$^2$.km.

**12.** The fibre according to one of claims 1 to 11, **characterised in that** for a wavelength of 1300 nm it has a chromatic dispersion which in terms of absolute value is less than 7 ps/nm.km.

**13.** The fibre according to one of claims 1 to 12, **characterised in that** the difference in the indices of the central portion and of the annular portion is between $13 \times 10^{-3}$ and $17 \times 10^{-3}$ inclusive.

**14.** The fibre according to one of claims 1 to 13, **characterised in that** the difference ($\Delta n_2$) between the index ($n_2$) of the annular portion and the index ($n_s$) of the cladding is between $-8 \times 10^{-3}$ and $-6 \times 10^{-3}$ inclusive.

**15.** The fibre according to one of claims 1 to 14, **characterised in that** the difference ($\Delta n_3$) between the index ($n_3$) of the ring and the index ($n_s$) of the cladding is between $3 \times 10^{-3}$ and $6 \times 10^{-3}$ inclusive.

**16.** The fibre according to one of claims 1 to 15, **characterised in that** the radius ($a_1$) of the central portion is less than or equal to 3 $\mu$m.

**17.** The fibre according to one of claims 1 to 16, **characterised in that** the ratio ($a_2 - a_1$)/$a_1$ between the thickness of the annular portion and the radius of the central portion is between 0.8 and 1.2 inclusive.

**18.** The fibre according to one of claims 1 to 17, **characterised in that** the ratio ($a_3 - a_2$)/$a_1$ between the thickness of the ring and the radius of the central portion is between 0.3 and 0.7 inclusive.

**19.** Use of the fibre according to one of the preceding claims for wavelength multiplexing transmission systems.


**Patentansprüche**

**1.** Dispersionsverschobene Monomode-Lichtleitfaser, **dadurch gekennzeichnet, dass** sie ein Indexprofil mit einem Faserkern und eine Hülle mit konstantem Index aufweist, wobei der Kern aus einem zentralen Bereich mit einem Index ($n_1$) höher als derjenige ($n_s$) der Hülle der Faser, einem ringförmigen Bereich mit einem Index ($n_2$) niedriger als derjenige der Hülle um den zentralen Bereich herum, und einem Ring mit einem Index ($n_3$) höher als derjenige der Hülle um den ringförmigen Bereich herum besteht, wobei die Parameter des Profils so eingestellt sind, dass die Faser in dem Wellenlängenbereich von 1400 bis 1650 nm ein Maximum der chromatischen Dispersion und eine chromatische Dispersionsneigung im Absolutwert unter 0,05 ps/nm$^2$.km aufweist, und wobei die chromatische Dispersion bei den Wellenlängen von 1400 nm und 1650 nm geringer als das Maximum der chromatischen Dispersion im Wellenlängenbereich von 1400 bis 1650 nm ist.

**2.** Faser nach Anspruch 1, **dadurch gekennzeichnet, dass** das Maximum im Wellenlängenbereich von 1400 bis 1650 nm einzig ist.

**3.** Faser nach Anspruch 1 oder 2, **dadurch gekennzeichnet, dass** sie bei dem Maximum einen positiven Wert der chromatischen Dispersion aufweist.

**4.** Faser nach Anspruch 3, **dadurch gekennzeichnet, dass** das Maximum für eine Wellenlänge zwischen 1530 und 1580 nm erreicht wird.

**5.** Faser nach Anspruch 3 oder 4, **dadurch gekennzeichnet, dass** sie eine chromatische Nulldispersion für eine Wellenlänge von weniger als 1450 nm aufweist.

**6.** Faser nach Anspruch 3, 4 oder 5, **dadurch gekennzeichnet, dass** sie eine chromatische Nulldispersion für eine Wellenlänge von mehr als 1600 nm aufweist.

**7.** Faser nach Anspruch 1 oder 2, **dadurch gekennzeichnet, dass** sie bei dem Maximum einen negativen Wert der chromatischen Dispersion aufweist.

**8.** Faser nach Anspruch 7, **dadurch gekennzeichnet, dass** das Maximum für eine Wellenlänge zwischen 1480 und 1520 nm erreicht wird.

**9.** Faser nach einem der Ansprüche 1 bis 8, **dadurch gekennzeichnet, dass** sie im Wellenlängenbereich von 1530 bis 1580 nm eine positive chromatische Dispersionsneigung aufweist.

**10.** Faser nach einem der Ansprüche 1 bis 7, **dadurch gekennzeichnet, dass** sie im Wellenlängenbereich von 1530 bis 1580 nm eine negative chromatische Dispersionsneigung aufweist.

**11.** Faser nach einem der Ansprüche 1 bis 10, **dadurch gekennzeichnet, dass** sie im Wellenlängenbereich von 1530 bis 1580 nm eine chromatische Dispersionsneigung aufweist, die im Absolutwert unter 0,03 $ps/nm^2.km$ liegt.

**12.** Faser nach einem der Ansprüche 1 bis 11, **dadurch gekennzeichnet, dass** sie für eine Wellenlänge von 1300 nm eine chromatische Dispersion aufweist, die im Absolutwert unter 7 ps/nm.km liegt.

**13.** Faser nach einem der Ansprüche 1 bis 12, **dadurch gekennzeichnet, dass** die Differenz der Indizes des zentralen Bereichs und des ringförmigen Bereichs zwischen $13.10^{-3}$ und $17.10^{-3}$ liegt.

**14.** Faser nach einem der Ansprüche 1 bis 13, **dadurch gekennzeichnet, dass** die Differenz ($\Delta n_2$) zwischen dem Index ($n_2$) des ringförmigen Bereichs und dem Index ($n_s$) der Hülle zwischen $-8.10^{-3}$ und $-6.10^{-3}$ liegt.

**15.** Faser nach einem der Ansprüche 1 bis 14, **dadurch gekennzeichnet, dass** die Differenz ($\Delta n_3$) zwischen dem Index ($n_3$) des Rings und dem Index ($n_s$) der Hülle zwischen $3.10^{-3}$ und $6.10^{-3}$ liegt.

**16.** Faser nach einem der Ansprüche 1 bis 15, **dadurch gekennzeichnet, dass** der Radius ($a_1$) des zentralen Bereichs kleiner als oder gleich 3 $\mu$m ist.

**17.** Faser nach einem der Ansprüche 1 bis 16, **dadurch gekennzeichnet, dass** das Verhältnis $(a_2 - a_1)/a_1$ zwischen der Dicke des ringförmigen Bereichs und dem Radius des zentralen Bereichs zwischen 0,8 und 1,2 liegt.

**18.** Faser nach einem der Ansprüche 1 bis 17, **dadurch gekennzeichnet, dass** das Verhältnis $(a_3 - a_2)/a_1$ zwischen der Dicke des Rings und dem Radius des zentralen Bereichs zwischen 0,3 und 0,7 liegt.

**19.** Verwendung der Faser nach einem der vorhergehenden Ansprüche für Übertragungssysteme mit Wellenlängenmultiplex.

## FIG_1

$\Delta n$

$\Delta n_1 = 10.10^{-3}$

$\Delta n_3 = 3,2.10^{-3}$

$\Delta n_2 = -6.10^{-3}$

$d_1$  $d_2$  $d_3$  $r(\mu m)$

## FIG_2  Art antérieur

$\Delta n$

$\Delta n_1 = 10.10^{-3}$

$\Delta n_3 = 5.10^{-3}$

$\Delta n_4 = 0,3.10^{-3}$

$\Delta n_2 = -6.10^{-3}$

$d_1$  $d_2$  $d_3$  $d_4$  $r(\mu m)$

## RÉFÉRENCES CITÉES DANS LA DESCRIPTION

**Documents brevets cités dans la description**

- EP 0368014 A

- EP 0131634 A


**Littérature non-brevet citée dans la description**

- **RICHARD LUNDIN.** Dispersion Flattening in a W fiber. *Applied Optics,* 1994, vol. 33 (6), 1011-1014
- **Y. LI ; C.D. HUSSEY.** Triple-clad single mode fibers for dispersion flattening. *Optical Engineering,* 1994, vol. 33 (12), 3999-4005

- **P.K. BACHMANN.** Worldwide status of dispersion-modified single mode fibres. *Philips J. Res.,* 1987, vol. 42, 435-450
- **L.G. COHEN et al.** *Electronic Letters,* 1982, vol. 18, 1023-1024